# EUROPEAN PATENT APPLICATION

(11) **EP 3 290 098 A1**
(43) Date of publication of application: **07.03.2018**
(21) Application number: 16001894.1
(22) Date of filing: 30.08.2016
(51) Int. Cl.: B01D 53/04, C01B 23/00

(54) **METHOD FOR OPERERATING AN ADSORBER ARRANGEMENT AND ADSORBER ARRANGEMENT**

(71) Applicant: Linde Aktiengesellschaft, 80331 München (DE)
(72) Inventor: Wilhelm, Hanspeter, 8162 Steinmaur (CH); Fisel, Wolfgang, 8600 Dübendorf (CH)
(74) Representative: Richmond, Sarah

(57) **Abstract**

Method for operating an adsorber arrangement (1), the adsorber arrangement (1) comprising a first (10) and a second (20) adsorber device, arranged in parallel between an upstream process device (2) providing a process gas and a downstream process device (3) receiving a purified process gas, the method comprising the steps of: during a process of purifying the process gas with the first adsorber device, (10) cooling the second adsorber device (20) by passing a portion of purified process gas, received from the first adsorber device (10), through the second adsorber device (20) and directing the process gas portion that has passed through the second adsorber device (20) to the upstream process device (2); sequentially coupling the first (10) and the second (20) adsorber device, such that process gas from the upstream process device (2) passes through the second adsorber device (20) for cooling the second adsorber device (20), and through the first adsorber device (10); and receiving purified process gas at the downstream process device (3) from the first adsorber device (10).

## Description

The invention relates to a method for operating an adsorber arrangement and to an adsorber arrangement.

Process engineering arrangements can be used to purify a process gas. Natural gas sources often contain numerous gas species or components. However, for many technical processes, a pure product of a given gas species is needed. Purification of a gas stream from the natural gas source may involve several processes. One such process which is often employed is a selective adsorption process by passing the multicomponent gas stream through an adsorber device.

Such adsorber devices exploit thermodynamic principles to purify a gas stream. Each gas species has its own properties such as vapor pressure and boiling point. Depending on the thermodynamic variables of the gas stream, such as absolute temperature and total pressure, it is possible that one component of a gas stream adsorbs to a surface of an adsorbent, while the other components are not adsorbing and thus pass the adsorbent. The adsorbed component is called the adsorbate. Typical adsorber devices are filled with adsorbents with a large specific surface. In effect, the purified gas stream does not contain the adsorbed component anymore, or at least only to very small amounts.

However, such an adsorber device has a limited adsorption capacity. This makes it necessary to regenerate it, in order to use it repeatedly. The adsorption process is an equilibrium process, which is very sensitive to changes of the thermodynamic variables, especially temperature and pressure. In the case of temperature swing adsorption devices, by raising the temperature of the adsorber device, the adsorbent may desorb from the adsorbate, which means that it is set free from the surface of the adsorbate and becomes a part of the gas stream. This way, the adsorber device is regenerated. In addition, a so-called "pump and purge" operation can be performed to regenerate the adsorber device. After regeneration, the adsorber device must be cooled down to the operational temperature in order to be employed again for purifying a gas stream.

For continuous production of a gas product, two adsorber devices can be employed. Then, one adsorber device is operated in the cleaning mode and the other adsorber device is operated in the regeneration mode. The two adsorber devices are operated alternatingly and cyclically in the cleaning mode and in the regeneration mode.

A typical purity for industrial-scale production of helium is defined for example by the "Helium 5.0" specification of Linde. According to this specification, the helium product must not contain more than 10 ppm (parts per million) impurities. Higher purities, e.g. a maximum of 1 ppm, as specified by "Helium 6.0" by Linde, cannot be obtained continuously by the known purification processes. This is due to the very high sensitivity of the adsorption process to changes of the thermodynamic variables. Especially in transient states, e.g. when the process switches from one adsorber device to the other adsorber device, it often happens that there are pressure and/or temperature gradients in the system, which lead to a contamination of the purified gas stream.

In the light of these challenges, it is an objective of the present invention to provide an improved method to operate an adsorber arrangement to obtain a purified process gas.

According to a first aspect of the invention, a method for operating an adsorber arrangement is suggested. The adsorber arrangement comprises a first and a second adsorber device, which are arranged in parallel between an upstream process device providing a process gas and a downstream process device receiving a purified process gas. The suggested method comprises the steps of:
Purifying the process gas with the first adsorber device and cooling the second adsorber device by passing a portion of the purified process gas, received from the first adsorber device, through the second adsorber device. The process gas portion that has passed through the second adsorber device is directed to the upstream process device.

Sequentially coupling the first and the second adsorber device, such that process gas from the upstream process device passes through the second adsorber device for cooling the second adsorber device, and through the first adsorber device. The purified process gas is received at the downstream process device from the first adsorber device.

With this method, an adsorber device can be cooled to a target operational temperature in two subsequent steps. This method has the advantage that zones in the second adsorber device, which have not reached the target temperature after a first cooling step, due to a low mass flow of the purified process gas portion through the second adsorber device, are cooled down to the target temperature in a second step by increasing a mass flow of the process gas through the second adsorber device to the maximum mass flow. In the second step, the two adsorber devices are operated sequentially. Thus, even if the second adsorber device releases adsorbates and does not provide a process gas with the demanded purity, the impurities will be adsorbed in the first adsorber device. This way, a constant purity of the purified process gas is guaranteed.

The adsorber arrangement comprises at least two adsorber devices along with a duct system, which may comprise valves and/or controllable valves and ducts. Arranged in parallel means that there is more than one flow path possible from the upstream process device to the downstream process device via the adsorber arrangement. The flow paths are defined by the duct system. The actual flow path in an operation mode can be selected by setting valves, which are arranged at appropriate positions in the duct system. Setting a valve may involve opening, closing, or partially opening a valve. The valves can be diverting valves with more than one inlet and/or more than one outlet. Each adsorber device may be operated in several operational modes. For example, an adsorber device can be operated in a cleaning mode, a regeneration mode, and/or a cooling mode. The operational mode for the adsorber arrangement can be any combination of individual operational modes for each single adsorber device. Preferably, at least one adsorber device of the adsorber arrangement is operated in the cleaning mode at a time instant, which ensures that a constant mass flow of purified process gas is obtained at the downstream process device.

The upstream process device may be any kind of process engineering device like a compressor, a cooler, a cold box, a column, a rectifier an intermediate storage container, or the like. The upstream process device provides the process gas, which has a higher amount of impurities compared with the purified process gas.

The downstream process device may be a process engineering device like the upstream process device. It may also be a trailer, which may be used to store the purified process gas at a constant purity and transport the purified process gas to a customer and/or a different process engineering arrangement.

Passing process gas or a process gas portion through an adsorber device means that the process gas is directed to a first opening of the adsorber device, where it enters into the adsorber device. The adsorber device is filled with adsorbent, which is for example activated carbon, zeolite, silica gel, or the like. The process gas comes into contact with the adsorbent, which facilitates an exchange of adsorbates between the adsorbent and the process gas. Depending on the thermodynamic conditions, this can be an adsorption process, leading to a purified process gas, or a desorption process, leading to a contaminated or enriched process gas. Further, when the process gas and the adsorbent have a different temperature, a heat exchange will take place, leading to heating or cooling of the adsorber device.

During operation of an adsorber device in the cleaning mode, wherein purified process gas is obtained from the adsorber device, the adsorbates adsorb to the adsorbent of the adsorber device. The adsorbent can take up a limited amount of adsorbates. When this amount is reached, the adsorbent has to be regenerated in order to be reused. One can also say that the adsorber device is regenerated. Regeneration may involve increasing the temperature of the adsorber device and/or the gas pressure in the adsorber device. The temperature may be increased by purging the adsorber device with purge gas at an elevated temperature, by heating the adsorber device with an internal or external heating device and/or by closed loop circulation of a heated gas portion.

After regeneration of an adsorber device, it has to be cooled down to the target operational temperature. This temperature depends on the systems' parameters and the process for which the adsorber arrangement is employed. Directly after regeneration of the adsorber device, it can have a temperature of over 300 K. A first cooling process can involve external cooling devices. To keep the contamination of the adsorbent low, the adsorber device can be purged with the purified process gas. However, the downstream process can be very sensitive to changes of the process parameters. Then, the portion of the purified process gas that is used to cool down the second adsorber device should be below 20%, preferably below 10%, and more preferably below 5% of the total purified process gas that is obtained from the first adsorber device. This portion is directed to the second adsorber device to cool down the second adsorber device.

The gas portion that has passed the second adsorber device and has cooled down the second adsorber device has an increased temperature and potentially increased contamination. It is passed back to the upstream process device. The upstream process device may also be called upstream process. The upstream process can be sensitive to changes of the temperature. Thus the process gas portion, which is passed back with an elevated temperature, should not be too large. For example, it should be such that a temperature, which is associated with the upstream process device, does not increase more than 10 K, preferably not more than 5 K, and more preferably not more than 3 K.

When the second adsorber device has reached a first target temperature, or when at least 80%, preferably at least 90%, more preferably at least 95% of the adsorbent of the second adsorber device is at the target operational temperature, the second cooling step can be started. It is noted that the second adsorber device does not necessarily have a homogeneous temperature distribution. Due to the low mass flow of the purified process gas in the first cooling process, zones with an elevated temperature can persist. The second cooling step is employed to ensure that the second adsorber device reaches a homogeneous temperature distribution.

In the second cooling step, a portion of the process gas is directed to the second adsorber device from the upstream process device. The second adsorber device is now operated as if it was actually cleaning that portion of the process gas. During this second cooling step, the residual fraction of the adsorbent, which has not reached the target operational temperature, will be cooled down by gradually increasing the mass flow of the process gas portion through the second adsorber device, until reaching the maximum mass flow. After passing the second adsorber device, the process gas portion is directed to the first adsorber device, which is still operated in the cleaning mode, in which the purified process gas is obtained from the first adsorber device. This ensures that even when the second adsorber device is not fully at the target operational temperature and thus cannot provide process gas with the required purity, the purity of the purified process gas is constant. In this operational mode of the adsorber arrangement, the two adsorber devices are coupled sequentially.

Although the method is described with denoted first and second adsorber devices, it is clear that the adsorber devices can be interchanged. Further it is possible that more than two adsorber device are present and are operated in a manner a described above.

According to an embodiment of the method for operating an adsorber arrangement, the step of cooling the second adsorber device comprises directing the portion of purified process gas, received from the first adsorber device, to an outlet of the second adsorber device and receiving, at an inlet of the second adsorber device, the process gas portion that has passed through the second adsorber device and directing this process gas portion to the upstream process device. Further, the step of sequentially coupling the first and the second adsorber device comprises directing process gas from the upstream process device to the inlet of the second adsorber device, receiving, at the outlet of the second adsorber device, the process gas that has passed through the second adsorber device and directing this process gas to the first adsorber device.

In this embodiment, during the first cooling step, the purified process gas portion is directed opposite to the direction in the cleaning mode. This is understood from the order of how the purified process gas portion passes the outlet and the inlet of the adsorber device. By convention, the inlet denotes an opening of the adsorber device, which is employed to direct process gas to the adsorber device in the cleaning mode of the adsorber device. The outlet denotes an opening of the adsorber device, which is used to obtain purified process gas in the cleaning mode of the adsorber device. After the first cooling step, a portion of the process gas from the upstream process device is directed to the inlet of the second adsorber device. The outlet of the second adsorber device is now connected to the inlet of the first adsorber device. This means, that a change of the flow direction of the gas through the second adsorber device was performed by moving from the first cooling step to the second cooling step.

According to a further embodiment, the method for operating an adsorber arrangement comprises the step of:
During sequentially coupling the first and the second adsorber device, decoupling the first adsorber device from the upstream process device.

This embodiment has the advantage that the portion of the process gas that first flows through the second adsorber device can slowly be increased. Thus it is ensured, that an impact of an increased temperature of the portion of the process gas on the first adsorber device is low. This means, that the temperature of the first adsorber device does not exceed a predefined interval, thus ensuring the purity of the purified process gas.

For example, decoupling of the first adsorber device from the upstream process device may comprise reducing a mass flow of the process gas on a flow path from the upstream process device to the inlet of the first adsorber device. This can be done by setting a valve on this flow path appropriately. The mass flow of the process gas can be measured, for example, in m³/h (cubic meter/hour), Nm³/h (norm cubic meter/hour), kg/h, g/s, mol/h or other units.

According to a further embodiment, the method for operating an adsorber arrangement further comprises the steps of:
During decoupling of the first adsorber device from the upstream process device, increasing a mass flow of the process gas portion from the upstream process device through the second adsorber device.
Merging, upstream of the first adsorber device, the process gas portion that has passed through the second adsorber device with the process gas that is directed from the upstream process device to the first adsorber device.
Passing a full mass flow of the process gas provided by the upstream process device through the first adsorber device.

In this embodiment, the impact of a temperature increase of the process gas portion that passes through the second adsorber device to cool the second adsorber device can be controlled.

For example, an increase of the mass flow of the process gas through the second adsorber device can comprise a slow opening of a valve that is arranged in a flow path from the upstream process device to the inlet of the second adsorber device. A slow increase can be defined by an increase of up to 1%, up to 5%, or up to 10% of the full mass flow per hour. The full mass flow is the mass flow of the process gas that is provided by the upstream process device to the adsorber arrangement. Since small changes of the mass flow before and after passing an adsorber device are possible, for example because a certain fraction of the process gas adsorbs to the adsorbent, the full mass flow is not a fixed number but may vary as according to adsorption or desorption processes in the adsorber devices.

The slow increase does not necessarily involve a steady increase of the mass flow, but may be performed in a stepwise fashion. For example, in a first step, a mass flow of 5% of the total mass flow is directed to the second adsorber device for one hour. In a second step, the mass flow is increased to 10% of the total mass flow for two hours. In a third step, 25% of the total mass flow is directed to the second adsorber device for one hour and in a fourth step, 50% of the total mass flow is directed to the second adsorber device for one hour. Of course, fractions of the mass flow and time steps may be varied as required.

After passing through the second adsorber device, the portion of the process gas is merged with the residual portion of the process gas, which is directed to the first adsorber device directly, upstream of the first adsorber device. This can be done by merging the two portions of the process gas via a diverter valve with two inlets and one outlet. The full mass flow of the process gas is then directed to the inlet of the first adsorber device. The purified process gas is obtained from the outlet of the first adsorber device and is directed to the downstream process device.

In this embodiment, a portion of the process gas passes the second adsorber device and the first adsorber device sequentially. The residual portion of the process gas passes only the first adsorber device. In this sense, this operational mode of the adsorber arrangement may be called partially sequential cleaning mode.

According to a further embodiment, in the method for operating an adsorber arrangement the mass flow of the process gas portion through the second adsorber device is chosen depending on the temperature of the second adsorber device and the temperature of the first adsorber device.

This embodiment advantageously ensures that the temperature of the first adsorber device is not affected very strongly during the partially sequential cleaning mode. For example, not very strongly means that is does not vary more than ± 3 K. Therefore, the purity of the purified process gas obtained from the first adsorber device is guaranteed. Preferentially, this is controlled in suitable time intervals, for example by reading out temperature sensors attached to the first and second adsorber devices.

According to a further embodiment, the method for operating an adsorber arrangement further comprises the step of passing the full mass flow of the process gas provided by the upstream process device through the second adsorber device and through the first adsorber device sequentially, after decoupling the first adsorber device from the upstream process device.

This operational mode of the adsorber arrangement may be called sequential operation. An advantage of this embodiment is that while a full mass flow of the process gas passes the second adsorber device, thus a maximum cooling effect is obtained, the purity of the purified process gas is still ensured by the first adsorber device, which is operated in the cleaning mode.

In this embodiment, the full mass flow of the process gas that is provided by the upstream process device passes the second and the first adsorber device sequentially.

According to a further embodiment, the method for operating an adsorber arrangement comprises the step of decoupling the second adsorber device from the first adsorber device, after the first adsorber device is decoupled from the upstream process device.

After a certain time interval in the sequential operation mode, the second adsorber device has reached its target operational temperature. Then, the process gas will have the required purity after passing through the second adsorber device. The first adsorber device can then be decoupled from the second adsorber device.

According to a further embodiment, the method to operate an adsorber arrangement further comprises the step of coupling the second adsorber device to the downstream process device, during decoupling the second adsorber device from the first adsorber device.

Since the process gas is obtained with the required purity after passing through the second adsorber device, the purified process gas can be obtained directly from the second adsorber device. To ensure a mass flow of the purified process gas to the downstream process device, a simultaneous coupling of the second adsorber device with the downstream process device is preferred while the second adsorber device is decoupled from the first adsorber device. For example, this can be done by simultaneously opening and closing respective valves of the piping system. Advantageously, this is done such that the total mass flow of purified process gas to the downstream process device is constant.

According to a further embodiment, the method to operate an adsorber arrangement further comprises the steps of:
After decoupling the second adsorber device from the first adsorber device, passing a full mass flow of the process gas provided by the upstream process device through the second adsorber device.
Receiving purified process gas at the downstream process device from the second adsorber device.
Decoupling the first adsorber device from the adsorber arrangement and regenerating the first adsorber device by heating the first adsorber device, after the first adsorber device is decoupled from the adsorber arrangement.

This embodiment ensures that the first adsorber device can be regenerated without affecting the purity of the purified process gas, because it is fully decoupled from the adsorber arrangement. Fully decoupled means that there is no possibility for a gas portion from the upstream process device, the downstream process device, or the second adsorber device to pass the first adsorber device.

Heating of the first adsorber device can be achieved by an internal or external heating device, by a closed loop circulation of a heated gas portion and/or by purging the adsorber device with a purge gas. The purge gas may be any suitable purge gas. It may be advantageous to employ the process gas at a suitable temperature and/or pressure as purge gas.

It is preferable that the regeneration of the first adsorber device can be finished before the second adsorber device has reached 30%, or 50%, or 70% of its maximum adsorption capacity. This way, it is ensured that the cooling of the first adsorber device, especially as according to one of the above mentioned embodiments, can be performed while the second adsorber device is still providing and ensuring the required purity of the purified process gas.

According to a further embodiment, the method to operate an adsorber arrangement further comprises the step of cooling the first adsorber device after regenerating the first adsorber device.

The cooling of the first adsorber device is preferably performed as according to one of the above-mentioned embodiments.

According to a further embodiment of the method to operate an adsorber arrangement, a mass flow of the purified process gas provided to the downstream process device for helium applications is in the range of 25 - 3000 g/s.

According to a further embodiment of the method to operate an adsorber arrangement, the purified process gas contains not more than 1 ppm impurities.

In this embodiment, an adsorber arrangement may be operated to provide helium with a purity as according to the Helium 6.0 specification of Linde continuously and with a large mass flow.

According to a further embodiment of the method to operate an adsorber arrangement, the purified process gas contains at least 99.9999 mol-% helium and less than 0.0001 mol-% impurities.

According to a further embodiment of the method to operate an adsorber arrangement, the target temperature of the second adsorber device is (20 ± 3) K, preferably (20 ± 2) K.

According to a further embodiment of the method to operate an adsorber arrangement, the target temperature of the second adsorber device in (80 ± 3) K, preferably (80 ± 2) K.

According to a further embodiment of the method to operate an adsorber arrangement, a process gas portion during coupling the first and the second adsorber device, that first passes the second adsorber device to cool the second adsorber device and then the first adsorber device, is chosen such that a temperature of the first adsorber device is stable at (20 ± 3) K, preferably (20 ± 2) K, when neon and/or hydrogen are considered as impurities or, alternatively, at (80 ± 3) K, preferably (80 ± 2) K when nitrogen, oxygen and/or argon are considered as impurities.

According to a further embodiment of the method to operate an adsorber arrangement, a time interval of sequentially coupling the first and the second adsorber device is larger than one hour, larger than two hours or larger than five hours.

In this embodiment it is ensured that a sufficiently long time interval is available for cooling down the adsorber devices.

According to a further embodiment of the method to operate an adsorber arrangement, the sequentially coupling of the first and the second adsorber device in a sequential arrangement is started when the first adsorber device has reached 50% - 60%, 60% - 70%, or over 70% of its maximum adsorption capacity.

According to a second aspect of the invention, an adsorber arrangement for purifying a process gas is suggested. The adsorber arrangement comprises a first and a second adsorber device, arranged in parallel between an upstream process device providing a process gas and a downstream process device receiving purified process gas. Further, it comprises a duct system comprising ducts and controllable valves for directing the process gas and a control device for controlling the controllable valves, wherein the control device is implemented to perform the method according to any of the above mentioned embodiments.

The adsorber arrangement comprises at least two adsorber devices along with a duct system and controllable valves. Arranged in parallel means that there is more than one flow path possible from the upstream process device to the downstream process device via the first and second adsorber devices. The flow paths are defined by the duct system, wherein a mass flow through a section of the duct system is controllable by the controllable valves. A controllable valve can be any device that can be actuated, positioned, triggered or driven such that a defined mass flow passes the device. Further, a controllable valve may control more than one mass flow. For example, it may split a mass flow into two or more portions, wherein each portion can have any fraction of the total mass flow. It may also be employed to merge to portions, such that two or more portions together form larger portion.

In embodiments, the control device is implemented as an electronic processing unit that is capable of executing logical algorithms, such as a PLC, a CPU, or the like.

The controllable valves may comprise electromechanical actuators for setting the state of the valve. The actuator can be controlled by an analog or digital signal. Then, the control device is configured to control a controllable valve by transmitting a respective control signal to the electromechanical actuator of the valve.

A computer program can be used to determine the setting of each valve as according to the operational mode of the adsorber arrangement. For example, the control device may be configured to control the controllable valves according to such program. It is also possible that the control device uses a look-up table which comprises information about the timing of certain operational modes. The look-up table may be stored in a data storage section in the control device.

Further embodiments of the adsorber arrangement may comprise sensors that can measure a mass flow through an adsorber device or a duct, temperature and/or pressure sensors and devices to control the purity of the purified process gas. The information provided by such sensors can advantageously be used in the operation of the adsorber arrangement to ensure the requested purity of the purified process gas. For example, a temperature sensor at an inlet of an adsorber device may be used to ensure that the process gas does not exceed a certain temperature range, which is an optimum temperature for operating the adsorber device in the cleaning mode.

Such an adsorber arrangement can be employed for obtaining purified process gas such as helium, hydrogen, nitrogen, oxygen, neon, argon, krypton and/or other process gases at a very high purity.

Certain embodiments of the presented method to operate an adsorber arrangement and the adsorber arrangement may comprise individual or combined features, method steps or aspects as mentioned above or below with respect to exemplary embodiments.

In the following, embodiments of adsorber arrangements and methods and devices relating to the operation of adsorber arrangement are described with reference to the enclosed drawings.
Fig. 1 shows a schematic process flow diagram of a first embodiment of an adsorber arrangement;
Fig. 2 shows a schematic process flow diagram of a second embodiment of an adsorber arrangement;
Fig. 3 a) shows a third embodiment of an adsorber arrangement operated in a first cleaning mode;

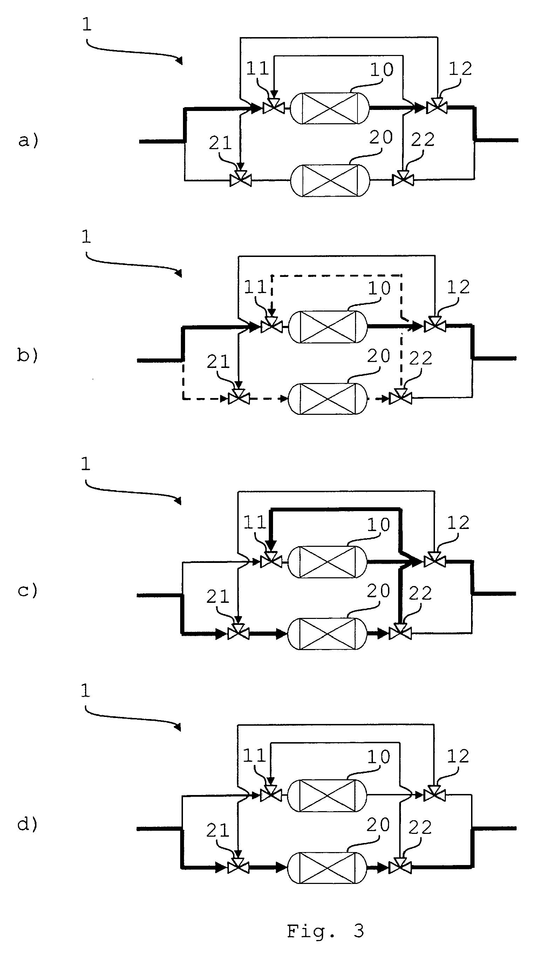

Fig. 3 b) shows the third embodiment of an adsorber arrangement operated in a partially sequential cleaning mode;
Fig. 3 c) shows the third embodiment of an adsorber arrangement operated in a sequential cleaning mode;
Fig. 3 d) shows the third embodiment of an adsorber arrangement operated in a second cleaning mode

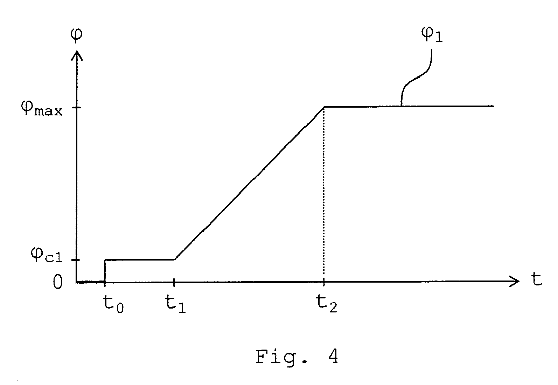

Fig. 4 shows a diagram with an example of a mass flow through one adsorber device in a time interval according to one embodiment of the method; and

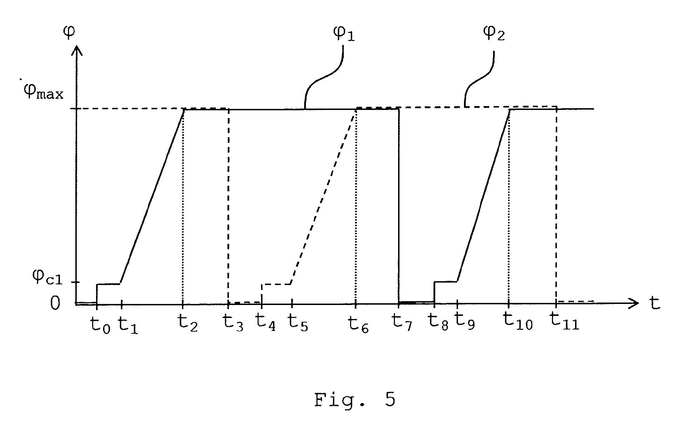

Fig. 5 shows a diagram with a mass flow through the first and the second adsorber device in a time interval comprising three switching cycles.

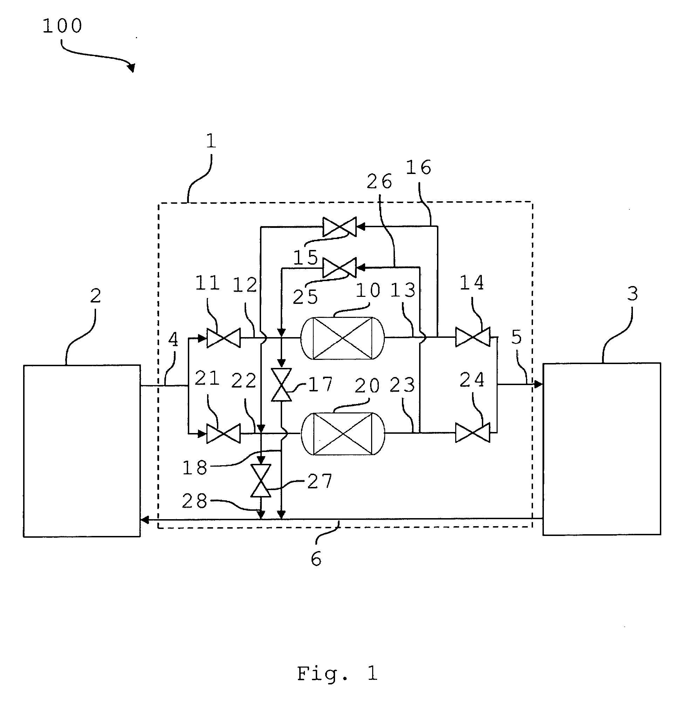

Fig. 1 shows a schematic process flow diagram of a first embodiment of an adsorber arrangement 1, which is part of a process engineering arrangement 100. Further, an upstream process device 2, which is implemented as a column 2, provides process gas to the adsorber arrangement 1. The adsorber arrangement 1 comprises a first adsorber device 10, a second adsorber device 20, several ducts 4, 5, 6, 12, 13, 16, 18, 22, 23, 26, 28, and several controllable valves 11, 14, 15, 17, 21, 24, 25, 27. The first and the second adsorber device 10, 20 are arranged in parallel between the column 2 and a downstream process device 3, which can be a heat exchanging device 3 or a vessel to store a purified process gas obtained from the adsorber arrangement 1.

In this embodiment, the adsorber arrangement 1 is employed to purify a cryogenic process gas, which consists of approximately 99.5% helium with the residual 0.5% being impurities like neon and/or hydrogen. The process gas is provided at 20 ± 2 K from the column 2 at a pressure of approximately 18 bar. Likewise, the adsorber devices 10, 20 need to be operated at this temperature to clean the process gas. In operation, a purified process gas with a helium content of at least 99.9999% is obtained, which corresponds to the Helium 6.0 specification of Linde AG. This purified process gas is delivered to the heat exchanging device 3, where it is further cooled down. By reducing the pressure to approximately ambient pressure, the helium stream is liquefied at a temperature of about 4 K.

The operation of the adsorber arrangement 1 is now explained in different operational modes for the adsorber arrangement 1. The operation of single adsorber devices 10, 20 in operation modes may be different from what is described in the following.

In a first cleaning mode, the column 2 provides the process gas at a full mass flow of 700 g/s via the process gas duct 4. In the first cleaning mode, the first adsorber device 10 is operated in a cleaning mode while the second adsorber device 20 is regenerated and/or pre-cooled. Therefore, inlet valve 11 is open, such that the full mass flow of the process gas can pass the inlet valve 11 to be directed to the feed duct 12 to the first adsorber device 10. Likewise, the inlet valve 21 is closed and no process gas enters the feed duct 22 of the second adsorber device 20 via this valve. The process gas passes the first adsorber device 10, thus being purified, and a purified process gas is obtained in the outlet duct 13 of the first adsorber device 10. The outlet valve 14 is fully opened, such that the full mass flow can pass and be directed to the heat exchanging device 3 via the purified process gas duct 5. In this first cleaning mode, the other valves 15, 17, 24, 25, 27 are closed and no mass flow of process gas occurs in the ducts 16, 18, 22, 23, 26, 28. A mass flow may occur in the return duct 6, because of evaporation of a fraction of the liquefied helium in and/or after the heat exchanging device 3, which is due to throttling of the purified process gas and/or flash gas formation. This portion is fed back to the upstream process device 2.

In a first cooling mode, which starts for example from the setting of the first cleaning mode, the second adsorption device 20 is regenerated and pre-cooled to a temperature of 30 K by opening the outlet valve 24 and the return valve 27. Thus, a portion of the purified process gas is directed through the second adsorber device 20. The mass flow can be controlled by either restricting the mass flow through the outlet valve 24 or through the return valve 27. For example, the outlet valve 24 of the second adsorber device 20 is opened a little bit, such that a portion of the full mass flow from the purified process gas duct 5 can enter the outlet duct 23 of the second adsorber device 20 via the outlet valve 24. The outlet valve 24 is set such that a mass flow of 35 - 70 g/s, corresponding to 5 - 10% of the full mass flow, can pass through the valve 24. This portion enters the second adsorber device 20 from its outlet duct 23, passes through it, cooling down the adsorbent, and enters the feed duct 22 of the second adsorber device 20. The process gas portion was heated up while passing through the second adsorber device 20 and needs to be cooled down, before it can be processed again. Therefore, the return valve 27 is opened such that the heated process gas is directed from the feed duct 22 to the return duct 6 and is fed back to the upstream process device 2. The further valves 15, 17, 21 are closed in this mode. In this first cooling mode, the second adsorber device 20 is cooled down to a first target temperature.

In a second cooling mode, the second adsorber device 20 is operated to reach its target operational temperature of 20 ± 3 K in a regular feeding mode. For this, the inlet valve 21 is set such that a fraction of the total mass flow of the process gas can enter the feed duct 22 of the second adsorber device 20. From there, it is fed to the inlet of the second adsorber device 20 and is obtained in the outlet duct 23 of the second adsorber device 20. The outlet valve 24 is fully closed in this operational mode. Instead, the bypass valve 25 is opened, such that the process gas portion is directed from the outlet duct 23 via the bypass duct 26 to the feed duct 12 of the first adsorber device 10. Thus, the first and the second adsorber device are coupled sequentially. The first adsorber device 10 is still operated in the cleaning mode, wherein the process gas is fed via the inlet valve 11 to the feed duct 12. In the feed duct 12, the bypassed gas portion, which has passed the second adsorber device 20 and has a potentially elevated temperature, merges with the process gas which was directed via the inlet valve 11 and the full mass flow passes through the first adsorber device 10. The mass flow of the bypassed gas portion with elevated temperature is chosen such that the temperature of the merged process gas passing through the first adsorber device 10 is approximately (22 ± 1) K. This can be measured, for example, by a temperature sensor (not shown) located at the inlet of the first adsorber device 10. The purified process gas is obtained in the outlet duct 13, from where it is directed via the fully opened outlet valve 14 into the purified process gas duct 5 and to the heat exchanging device 3. The valves 15, 17, 24, 25, 27 are fully closed in this operational mode. In this second cooling mode, the second adsorber device 20 is operated in a cleaning mode, however, the mass flow is restricted and the actual cleaning of the process gas is done by the first adsorber device 10.

The second cooling mode corresponds to the partially sequential cleaning mode which was described before, because a portion of the process gas passes through the second and the first adsorber devices 10, 20 sequentially.

In a sequential cleaning mode, the full mass flow of the process gas is directed from the process gas duct 4 via the inlet valve 21 of the second adsorber device 20 to the feed duct 22. From there, it passes the second adsorber device 20, thus further cooling down the second adsorber device 20. From the outlet duct 23, the full mass flow is directed via the bypass duct 26 and the fully opened bypass valve 25 to the feed duct 12 of the first adsorber device 10. It passes the first adsorber device 10, wherein it is cleaned to obtain the purified process gas in the outlet duct 13. From there, it is directed via the outlet valve 14 to the purified process gas duct 5. In this operational mode, the second adsorber device 20 will reach the conditions to be operated in the cleaning mode without needing the first adsorber device 10 to ensure the purity of the purified process gas. The valves 11, 15, 17, 24, 27 are fully closed in this operational mode.

In a second cleaning mode, the full process gas mass flow is directed from the process gas duct 4 via the inlet valve 21 to the feed duct 22, through the second adsorber device 20 to the outlet duct 23 ad via the outlet valve 24 to the purified process gas duct 5 and to the storing vessel 3. The first adsorber device 10 does not participate in the cleaning of the process gas. Thus, the first adsorber device 10 is decoupled from the second adsorber device 20. In this mode, the first adsorber device 10 may be operated in a regeneration mode.

A cleaning mode for single adsorber devices 10, 20 can be defined as providing a process gas to the inlet of the adsorber device 10, 20, and obtaining a process gas at the outlet of the adsorber device 10, 20. When the adsorber device 10, 20 is at its target operational temperature and has adsorption capacity left, the obtained process gas is purified process gas.

A regeneration mode for single adsorber devices 10, 20 may comprise the following procedure. Note, that additional valves and ducts may be necessary for operation in this regeneration mode, which are not shown in Fig. 1. For example the first adsorber device 10 is regenerated. For this, all valves 11, 14, 15 are fully closed. An electrical heating device (not shown) heats up the adsorber device 10, 20. Further, a purge gas is provided to the feed duct 12 of the first adsorber device 10. The purge gas may have a temperature of 120 - 150 K and a pressure of 1 mBar - 3 Bar. By purging the first adsorber device 10 with this purge gas, the impurities which have been released during the warm up process are removed from the isolated system and are transported with the purge gas. The contaminated purge gas can be processed by another device, which is not shown in Fig. 1.

The first and the second cooling modes which were described above can be adapted such that the first adsorber device 10 is cooled down, while the second adsorber device 20 is performing the actual cleaning of the process gas.

By cyclically operating the adsorber arrangement 1 in the operational modes as described, a continuous mass flow of purified helium with a purity of 99.9999% can be obtained.

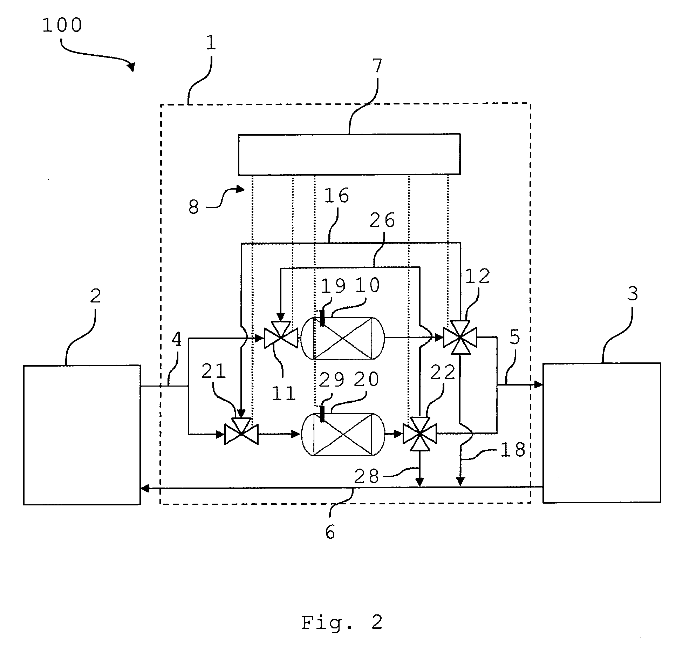

Fig. 2 shows a schematic process flow diagram of a second embodiment of an adsorber arrangement 1, which is arranged between an upstream process device 2 and a downstream process device 3, which together form a process engineering arrangement 100. The setup of this embodiment has controllable diverting valves 11, 12, 21, 22 and a control device 7, which is configured to control the controllable diverting valves 11, 12, 21, 22 via signaling lines 8. The signaling lines 8 can be implemented as wire connections or also as a wireless link, e.g. Wi-Fi, Bluetooth, or else. The controllable diverting valves11 and 21 are implemented with two inlets and one outlet each and can be set such that two gas portions are merged to form one larger gas portion. The controllable diverting valves 12 and 22 are implemented with one inlet and three outlets each and can be set to split an incoming mass flow into up to three portions, wherein each portion can have a mass flow with an arbitrary fraction of the incoming mass flow. Further, in this second embodiment the first and the second adsorber devices 10, 20 are equipped with temperature sensors 19, 29 which are configured to report a temperature of the devices to the control device 7. This embodiment can have the same functionality as the embodiment of Fig. 1 and will be described in the following.

In a first cleaning mode, the first adsorber device 10 is operated in the cleaning mode. For this, the diverting valve 11 is triggered by the control device 7 such that the full mass flow of the process gas from the process gas duct 4 passes to the first adsorber device 10. Note, that the feed duct and the outlet duct are not marked with separate reference signs in Fig. 2. The diverting valve 12 is set such that the full purified process gas passes to the purified process gas duct 5 and to the downstream process device 3. The other diverting valves 21, 22 are fully closed.

After a certain time interval being operated in the first cleaning mode, the control device 7 may trigger a change in the operational mode to a first cooling mode. The time interval may be predefined or the change may be triggered by a signal, e.g. after a certain total mass of purge gas passed the second adsorber device 20, while the adsorber arrangement 1 is operated in the first cleaning mode. Thus, the control device 7 triggers the diverting valve 12 such that a portion of the purified process gas passes into the bypass duct 16 and triggers the diverting valve 21 such that this portion passes from the bypass duct 16 to the second adsorber device 20. Further, the diverting valve 22 is triggered such that after passing through the second adsorber device 20, the gas portion is directed via the diverting valve 22 to the return duct 28, 6. The other outlets of the diverting valve 22, which lead to the purified process gas duct 5 or the bypass duct 26 are closed in this mode. Note that in this embodiment, the portion of the purified process gas that is employed to cool down the second adsorber device 20 is directed in the regular direction, i.e. from the inlet to the outlet through the second adsorber device 20, which is a difference to the first embodiment of Fig. 1.

After a time interval being operated in the first cooling mode, the control device 7 may trigger a change in the operational mode to a second cooling mode. The change may be triggered after a predefined time interval or by a sensor signal. For example, the temperature sensor 29 reports that the second adsorber device 20 has reached a predefined threshold temperature. Thus, the control device 7 triggers the diverting valve 21 to partially open such that a portion of the process gas passes from the process gas duct 4 to the second adsorber device 20. The mass flow of this portion is a fraction of the total mass flow provided by the upstream process device 2 and is controlled by the control device 7. Further, the control device 7 triggers the diverting valve 22 to direct the gas portion, after passing the second adsorber device 20, to the bypass duct 26 and triggers the diverting valve 11 such that the remaining portion of the process gas from the process gas duct 4 and the portion from the bypass duct 26 merge and form the process gas with the total mass flow to pass through the first adsorber device 10. Thereby, the total mass flow of the process gas is cleaned by the first adsorber device 10 and a portion of the process gas is employed to cool the second adsorber device 20.

After a time interval being operated in the second cooling mode, the control device 7 may trigger a change in the operational mode to a sequential cleaning mode. The change may be triggered after a predefined time interval or by a sensor signal. For example, the temperature sensor 29 reports that the second adsorber device 20 has reached a predefined threshold temperature. In the sequential cleaning mode, which can also be considered as a final stage of the second cooling mode, the control device 7 triggers the diverting valve 21 such that the total mass flow is directed from the process gas duct 4 via the diverting valve 21 through the second adsorber device 20, and further via the diverting valve 22 to the bypass duct 26 and via the diverting valve 11 to the first adsorber device 10. Finally, the purified process gas, after passing the first adsorber device, is directed via the diverting valve 12 to the purified process gas duct 5 and to the downstream process device 3. In this mode, no mass flow occurs from the process gas duct 4 via the diverting valve 11 to the first adsorber device 10. After a time interval being operated in the sequential cleaning mode, the control device 7 may trigger a change in the operational mode to a second cleaning mode. The change may be triggered by a sensor signal. For example, a sensor (not shown) may be attached to the outlet of the second adsorber device 20, which detects the purity of the process gas coming from the second adsorber device 20. When the purity reaches the required value and is stable, the second adsorber device can be operated in the cleaning mode without the need for an additional cleaning by the first adsorber device 10. In the second cleaning mode, the control device 7 triggers the diverting valve 22 to direct the total mass flow of the purified process gas to the purified process gas duct 5 and to the downstream process device 3. The diverting valves 11 and 12 are triggered to be fully closed in this mode. The control device 7 may further trigger a regeneration mode for the first adsorber device 10, such that it is purged by purge gas (not shown).

By cyclically operating the adsorber arrangement 1 in the operational modes as described, a continuous mass flow of purified helium with a purity of 99.9999% can be obtained. For this, the control device 7 is configured to automatically trigger the changes in the operational modes such that at least one of the adsorber devices 10, 20 is operated in the cleaning mode, while the other adsorber device 10, 20 is being regenerated and/or cooled down to the target operational temperature as according to the operational modes described above.

Fig. 3 a) - d) show a third embodiment of an adsorber arrangement 1 operated in different operational modes. In this third embodiment, many details were left out in order to show a simple setup to understand the different operational modes of the adsorber arrangement 1. In particular, a return duct 6 is not shown in this embodiment and reference numerals for the other ducts are omitted. The thick lines in the Fig. 3 a) - d) mark the flow path of the larger portion of the process gas. The dashed thick line in Fig. 3 b) marks the flow path of a portion of the process gas.

Fig 3 a) shows the third embodiment operated in the first cleaning mode, during which the first adsorber device 10 is cleaning the process gas. No process gas passes through the second adsorber device 20.

Fig. 3 b) shows the third embodiment operated in the partially sequential cleaning mode. For this, a portion of the process gas passes through the second adsorber device 20 and is directed, via the diverting valve 22 to the diverting valve 11, where it merges with the remaining portion of the process gas and the total mass flow passes through the first adsorber device 10 and is thus purified.

Fig. 3 c) shows the third embodiment operated in the sequential cleaning mode. Here, the full mass flow of the process gas first passes through the second adsorber device 20 and then via the diverting valves 22 and 11 through the first adsorber device 10.

Fig. 3 d) shows the third embodiment operated in the second cleaning mode, wherein the second adsorber device 20 is purifying the total mass flow of the process gas. No mass flow of process gas occurs through the first adsorber device 10 in this mode.

Fig. 4 shows a diagram with an example of a mass flow ϕ₁ of the process gas through the first adsorber device 10 in a time interval according to one embodiment of the method. In this example, at times before t₀, the mass flow ϕ₁ of the process gas through the adsorber device 10 is 0. For example, in this time interval, the adsorber device 10 is warmed up and purged by a purge gas and thus regenerated. At time t₀, the adsorber device 10 is fully regenerated and is pre-cooled by directing purified process gas through the adsorber device 10. The mass flow ϕ_{c1} of the purified process gas is of the order of 10% of the full mass flow ϕₘₐₓ. After this pre-cooling procedure at t₁, the adsorber device 10 has to be cooled down to the target operational temperature. Therefore, the mass flow ϕ₁ is increased slowly, until it reaches the maximum ϕₘₐₓ at a time t₂. The time interval t₁ - t₂ corresponds to the second cooling mode described with reference to Fig. 1 and/or Fig. 2. At times after t₂, the maximum mass flow ϕₘₐₓ passes the adsorber device 10.

Fig. 5 shows a diagram with the mass flow ϕ₁, ϕ₂ through the first and the second adsorber device 10, 20 of an adsorber arrangement, for example the adsorber arrangement 1 of either Fig. 1, Fig. 2, or Fig. 3 in a time interval comprising three cycles. At times before t₀, the adsorber arrangement 1 is operated in the second cleaning mode. ϕ₂, which is the mass flow through the second adsorber device 20, is equal to the total mass flow ϕₘₐₓ. The first adsorber device 10 is being regenerated.

At the time point t₀, the first adsorber device 10 is fully regenerated and is being pre-cooled by passing a portion ϕ_{c1} of the purified process gas through it. At time point t₁ pre-cooling has finished and the switching process starts in order to cool the first adsorber device 10 to the target operational temperature. For this, the adsorber arrangement 1 may be operated in the second cooling mode or the partially sequential cleaning mode. A portion of the process gas is directed through the first adsorber device 10, thus ϕ₁ increases. The portion that passes the first adsorber device 10 is bypassed to the second adsorber device 20, thus still the total mass flow occurs through the second adsorber device 20. At a time point t₂, the total mass flow is first directed through the first adsorber device 10 and through the second adsorber device 20, which ensures the purity of the purified process gas. This corresponds to the sequential cleaning mode.

At a time point t₃ the first adsorber device 10 has reached its target operational temperature and can thus be used alone to clean the process gas and provide the required purity. At this time point t₃, the second adsorber device 20 is decoupled from the process gas and is regenerated. This corresponds to the first cleaning mode.

At time point t₄, the second adsorber device 20 is regenerated and is being pre-cooled by passing a portion ϕ_{c1} of the purified process gas through it. At time point t₅ pre-cooling has finished and the switching process starts in order to cool the second adsorber device 20 to the target operational temperature. As before, a portion of the process gas is directed through the second adsorber device and ϕ₂ increases. The adsorber arrangement 1 is operated in the second cooling mode until time point t₆, when the full mass flow passes through both adsorber devices 10, 20 sequentially, which then corresponds to the sequential cleaning mode.

At time point t₇ the second adsorber device 20 has reached its target operational temperature and is thus employed to clean the process gas alone, so that the first adsorber device 10 can be regenerated. This corresponds to the second cleaning mode.

The time point t₈ corresponds to the time point t₀, such that by repeating the process as described above, a cyclical operation of the adsorber arrangement 1 is achieved to provide a continuous flow of purified process gas.

### Reference Numerals

- 1: adsorber arrangement
- 2: upstream process device
- 3: downstream process device
- 4: process gas duct
- 5: purified process gas duct
- 6: return duct
- 7: controller device
- 8: control device signal lines
- 10: first adsorber device
- 11: inlet valve for the first adsorber device
- 12: feed duct for the first adsorber device
- 13: outlet duct of the first adsorber device
- 14: outlet valve for the first adsorber device
- 15: bypass valve
- 16: bypass duct
- 17: return valve
- 18: return duct
- 19: temperature sensor
- 20: second adsorber device
- 21: inlet valve for the second adsorber device
- 22: feed duct for the second adsorber device
- 23: outlet duct of the second adsorber device
- 24: outlet valve for the second adsorber device
- 25: bypass valve
- 26: bypass duct
- 27: return valve
- 28: return duct
- 29: temperature sensor
- 100: process engineering arrangement
- t: time axis
- t₀: time point (starting time of pre-cooling)
- t₁: time point (starting time of switching process)
- t₂: time point (full gas flow through both adsorber devices sequentially)
- t₃: time point (switching to only one adsorber device)
- t₄: time point (starting time of pre-cooling the regenerated adsorber device)
- t₅: time point (starting time of switching process)
- t₆: time point (full gas flow through both adsorber devices sequentially)
- t₇: time point (switching to only one adsorber device)
- t₈: time point (starting time of pre-cooling the regenerated adsorber device)
- t₉: time point (starting time of switching process)
- t₁₀: time point (full gas flow through both adsorber devices sequentially)
- t₁₁: time point (switching to only one adsorber device)
- ϕ: gas flow
- ϕ₁: process gas flow through first adsorber device
- ϕ₂: process gas flow through second adsorber device
- ϕ_{c1}: pre-cooling purified process gas flow
- ϕₘₐₓ: maximum process gas flow

## Claims

1. Method for operating an adsorber arrangement (1), the adsorber arrangement (1) comprising a first (10) and a second (20) adsorber device, arranged in parallel between an upstream process device (2) providing a process gas and a downstream process device (3) receiving a purified process gas, the method comprising the steps of:
during a process of purifying the process gas with the first adsorber device, (10) cooling the second adsorber device (20) by passing a portion of purified process gas, received from the first adsorber device (10), through the second adsorber device (20) and directing the process gas portion that has passed through the second adsorber device (20) to the upstream process device (2);
sequentially coupling the first (10) and the second (20) adsorber device, such that process gas from the upstream process device (2) passes through the second adsorber device (20) for cooling the second adsorber device (20), and through the first adsorber device (10); and
receiving purified process gas at the downstream process device (3) from the first adsorber device (10).

2. Method according to claim 1, wherein the step of cooling the second adsorber device comprises
directing the portion of purified process gas, received from the first adsorber device (10) to an outlet of the second adsorber device (20), receiving, at an inlet of the second adsorber device (20), the process gas portion that has passed through the second adsorber device (20) and directing this process gas portion to the upstream process device (2); and wherein the step of sequentially coupling the first (10) and the second (20) adsorber device comprises
directing process gas from the upstream process device (2) to the inlet of the second adsorber device (20), receiving, at the outlet of the second adsorber device (20), the process gas that has passed through the second adsorber device (20) and directing this process gas to the first adsorber device (10).

3. Method according to claim 1 or 2, further comprising:
during sequentially coupling the first (10) and the second (20) adsorber device, decoupling the first adsorber device (10) from the upstream process device (2).

4. Method according to claim 3, further comprising:
during decoupling the first adsorber device (10) from the upstream process device (2), increasing a mass flow (ϕ₂) of the process gas portion from the upstream process device (2) through the second adsorber device (20);
merging, upstream of the first adsorber device (10), the process gas portion that has passed through the second adsorber device (20) with the process gas that is directed from the upstream process device (2) to the first adsorber device (10); and
passing a full mass flow (ϕₘₐₓ) of the process gas provided by the upstream process device (2) through the first adsorber device (10).

5. Method according to claim 4, wherein the mass flow (ϕ₂) of the process gas portion through the second adsorber device (20) is chosen depending on the temperature of the second adsorber device (20) and the temperature of the first adsorber device (10).

6. Method according to any one of claims 3 - 5, further comprising:
after decoupling the first adsorber device (10) from the upstream process device (2), passing the full mass flow (ϕₘₐₓ) of the process gas provided by the upstream process device (2) through the second adsorber device (20) and through the first adsorber device (10) sequentially.

7. Method according to any one of claims 3 - 6, further comprising:
after decoupling the first adsorber device (10) from the upstream process device (2), decoupling the second adsorber device (20) from the first adsorber device (10).

8. Method according to claim 7, further comprising:
during decoupling the second adsorber device (20) from the first adsorber device (10), coupling the second adsorber device (20) with the downstream process device (3).

9. Method according to claim 8, further comprising:
after decoupling the second adsorber device (20) from the first adsorber device (10), passing a full mass flow (ϕₘₐₓ) of the process gas provided by the upstream process device (2) through the second adsorber device (20);
receiving purified process gas at the downstream process device (3) from the second adsorber device (20);
decoupling the first adsorber device (10) from the adsorber arrangement (1); and
after decoupling the first adsorber device (10) from the adsorber arrangement (1), regenerating the first adsorber device (10) by heating the first adsorber device (10).

10. Method according to claim 9, further comprising:
after regenerating the first adsorber device (10), cooling the first adsorber device (10).

11. Method according to any one of claims 1 - 10, wherein the purified process gas contains at most 1 ppm impurities.

12. Method according to any one of claims 1 - 11, wherein the mass flow of the process gas portion during coupling the first (10) and the second (20) adsorber device, that first passes the second adsorber device (20) to cool the second adsorber device (20) and then the first adsorber device (10), is chosen such that a temperature of the first adsorber device (10) is stable at (20 ± 3) K, preferably at (20 ± 2) K.

13. Method according to any one of claims 1 - 12, wherein a time interval of sequentially coupling the first (10) and the second (20) adsorber device is larger than one hour, larger than two hours or larger than five hours.

14. Method according to any one of claims 1 - 13, wherein the sequentially coupling of the first (10) and the second adsorber device (20) is started if an adsorption capacity of the first adsorber device (10) is more than 50%, preferably more than 60%, or more preferably more than 70% of its maximum adsorption capacity.

15. Adsorber arrangement (1) for purifying a process gas comprising:
a first (10) and a second adsorber device (20), arranged in parallel between an upstream process device (2) providing a process gas and a downstream process device (3) receiving purified process gas;
a duct system comprising ducts (4, 5, 6, 12, 13, 16, 18, 22, 23, 26, 28) and controllable valves (11, 14, 15, 17, 21, 24, 25, 27) for directing the process gas; and
a control device (7) for controlling the controllable valves (11, 14, 15, 17, 21, 24, 25, 27), wherein the control device (7) is implemented to perform a method of any one of claims 1 - 14.
